# EUROPÄISCHE PATENTSCHRIFT

(11) **EP 2 423 482 B1**
(45) Veröffentlichungstag und Bekanntmachung des Hinweises auf die Patenterteilung: **19.06.2019**
(21) Anmeldenummer: 11178596.0
(22) Anmeldetag: 24.08.2011
(51) Int. Cl.: F01P 3/20, F01P 9/06, F02B 29/04, F02M 35/10

(54) **Kühlsystem für ein Fahrzeug**
Cooling system for a vehicle
Système de refroidissement pour un véhicule

(30) Priorität: 26.08.2010 DE 102010039810
(43) Veröffentlichungstag der Anmeldung: 29.02.2012
(73) Patentinhaber: MAHLE Behr GmbH & Co. KG, 70469 Stuttgart (DE)
(72) Erfinder: Diem, Johannes, 71297 Weissach (DE); Müller, Rolf, 71711 Steinheim (DE); Nguyen, Chi-Duc, 70619 Stuttgart (DE); Hofmann, Herbert, 70376 Stuttgart (DE); Haßdenteufel, Klaus, 70839 Gerlingen (DE)
(74) Vertreter: Grauel, Andreas

(56) Entgegenhaltungen:
- WO-A1-03/042515
- WO-A1-2006/070080
- FR-A1- 2 846 368
- US-A- 5 353 757
- US-A1- 2001 045 103
- US-A1- 2009 211 542

## Beschreibung

Die vorliegende Erfindung bezieht sich auf ein Kühlsystem für ein Fahrzeug, wobei das Kühlsystem eine Ladeluftkühleinheit für eine Motoranordnung und eine Kondensatoreinheit für eine Klimaanlage aufweist.

In einem Fahrzeug werden für gewöhnlich ein Ladeluftkühler des Motors und ein Kondensator der Klimaanlage über zwei getrennte Kühlkreisläufe mit Kühlmittel versorgt.

Jede der Druckschriften US2001/045103 A1 und US 2009/211542 A1 zeigt eine Parallelverschaltung eines Ladeluftkühlers und eines Kondensators, die ohne Durchflussregeleinheit erfolgt.

Die WO 03/042515 A1 offenbart eine Verschaltung eines Kühlkreislaufs eines Fahrzeugmotors.

Die FR 2846 368 A1 offenbart einen Kühlkreislauf mit einem Ladeluftkühler und einem Kondensator.

Es ist die Aufgabe der vorliegenden Erfindung, ein verbessertes Kühlsystem für ein Fahrzeug zu schaffen.

Diese Aufgabe wird durch ein Kühlsystem gemäß Anspruch 1 gelöst.

Der vorliegenden Erfindung liegt die Erkenntnis zugrunde, dass eine effiziente Verschaltung eines indirekten Ladeluftkühlers und eines indirekten Kondensators in einem gemeinsamen Kühlkreislauf erhebliche Vorteile bietet. Erfindungsgemäß erfolgt hierzu eine Parallelverschaltung des indirekten Ladeluftkühlers mit dem indirekten Kondensator in einem Niedertemperatur-Kühlkreislauf, ohne dass dabei die beiden Komponenten im Wettbewerb um kaltes Kühlmittel stehen. Kerngedanke der Erfindung ist daher die bedarfsgerechte Bereitstellung von kaltem Niedertemperatur-Kühlmittel an den indirekten Ladeluftkühler und den indirekten Kondensator in einem gemeinsamen Kühlkreislauf.

Vorteilhafterweise kann ein gemeinsamer Kühlkreislauf die beiden Komponenten Ladeluftkühler und Kondensator mit Kühlmittel versorgen, was eine Platzersparnis und gesteigerte Kühleffizienz für das Fahrzeug ermöglicht. Ein Vorteil der Erfindung ist, dass die Kühlmittelversorgung von Ladeluftkühler und Kondensator je nach Betriebssituation des Fahrzeugs an den aktuellen Bedarf der zu kühlenden Komponenten abgestimmt ist. So steht beispielsweise in den Betriebsfällen Leerlauf und Teillast, wenn der Ladeluftkühler wenig oder keine Kühlleistung benötigt, diese nämlich genau dann verstärkt bis ausschließlich dem Kondensator zur Verfügung und es ergibt sich bei gleichzeitiger Klimatisierung ein Verbrauchsvorteil für das Fahrzeug. Im Volllastbetrieb des Fahrzeugs steht dennoch eine ausreichende Kühlung der Ladeluft zur Verfügung. Diese Vorteile ergeben sich gemäß Ausführungsformen der vorliegenden Erfindung auf konstruktiv unaufwändige und kostengünstige Weise, da keine stärkere Pumpe und keine elektrische Steuerung verwendet werden muss und die Pumpenleistung im Niedertemperatur-Kreislauf nicht verändert werden muss.

Die vorliegende Erfindung schafft ein Kühlsystem für ein Fahrzeug gemäß Anspruch 1.

Unter einem Fahrzeug kann hierbei ein Fahrzeug mit Verbrennungsmotor, insbesondere ein straßengebundenes Kraftfahrzeug, wie beispielsweise ein Personenkraftwagen, Lastkraftwagen, Omnibus oder ein anderes Nutzfahrzeug, verstanden werden. Das Kühlsystem ist Teil des Fahrzeugs und wälzt einen Kühlmittelstrom, beispielsweise eines Niedertemperatur-Kühlmittels, in einem Kühlkreislauf um. Von dem Kühlsystem werden nun erfindungsgemäß die Ladeluftkühleinheit und die Kondensatoreinheit mit Kühlmittel versorgt. In der Ladeluftkühleinheit wird durch das Kühlmittel die Ladeluft für einen von der Motoranordnung umfassten Motor des Fahrzeugs gekühlt. Es handelt sich hierbei um einen Ladeluftkühler, insbesondere einen indirekten Ladeluftkühler. In der Kondensatoreinheit wird durch das Kühlmittel ein Kältemittel für eine Klimaanlage des Fahrzeugs gekühlt. Es handelt sich hierbei um einen Kondensator, insbesondere einen indirekten Kondensator. Die Mittel zum Zuführen des Kühlmittelstroms erfüllen in Gestalt von Schlauch- bzw. Rohrleitungen zwischen den Elementen im Kühlkreislauf eine Verbindungsfunktion und ggf. in Gestalt eines Flussregelungsglieds eine Steuerungsfunktion für den Kühlmitteldurchsatz in unterschiedlichen Elementen im Kühlkreislauf. Zudem können die Mittel ein oder mehrere Verzweigungselemente zum Aufteilen des Kühlmittelstroms in Teilströme und ein oder mehrere Verbindungselemente zum Zusammenführen der Teilströme des Kühlmittelstroms umfassen.

Gemäß einem nicht erfindungsgemäßen Beispiel können die Mittel zum Zuführen des Kühlmittelstroms ausgebildet sein, um den Kühlmittelstrom in einen ersten Anteil für die Ladeluftkühleinheit und einen zweiten Anteil für die Kondensatoreinheit aufzuteilen. Der erste Anteil und der zweite Anteil des Kühlmittelstroms sind parallele Zweige des Kühlmittelstroms. Der Kühlmittelstrom teilt sich an einer Verzweigungsstelle zwischen den beiden parallelen Zweigen auf. Der erste Zweig mit dem ersten Anteil des Kühlmittelstroms verläuft durch die Ladeluftkühleinheit. Der zweite Zweig mit dem zweiten Anteil des Kühlmittelstroms verläuft durch die Kondensatoreinheit. Dies bietet den Vorteil, dass beiden Einheiten durch Parallelschaltung gleichermaßen kaltes Kühlmittel bereitgestellt werden kann.

In einem weiteren nicht erfindungsgemäßen Beispiel können die Mittel zum Zuführen des Kühlmittelstroms zumindest eine Durchflussregeleinheit zum Verändern eines Verhältnisses zwischen dem ersten und dem zweiten Anteil des Kühlmittelstroms aufweisen. Unter einer Durchflussregeleinheit kann ein Thermostat bzw. Thermostatventil verstanden werden. Die Anteile können jeweils Kühlmittelteilströme darstellen. Durch Verändern des Verhältnisses der Anteile des Kühlmittelstroms sind die Anteile folglich variabel. Beispielsweise können die Anteile in Bezug auf ihr Mengenverhältnis verändert werden. Dies bietet den Vorteil, dass je nach Bedarf eine der Ladeluftkühleinheit und der Kondensatoreinheit einen größeren Anteil des Kühlmittelstroms erhalten kann als die andere. Somit wird nicht unnötig viel Kühlleistung dahin geleitet, wo aktuell weniger davon benötigt wird.

In einem weiteren nicht erfindungsgemäßen Beispiel kann die Durchflussregeleinheit in der Ladeluftkühleinheit oder in Flussrichtung nach der Ladeluftkühleinheit angeordnet sein und ausgebildet sein, um den ersten Anteil zu verändern. Die Durchflussregeleinheit kann hierbei in Flussrichtung direkt anschließend an die Ladeluftkühleinheit angeordnet sein. Wird für die Ladeluftkühleinheit aktuell weniger oder keine Kühlleistung benötigt, so kann die Durchflussregeleinheit den ersten Anteil des Kühlmittelstroms verringern oder ganz reduzieren. Wird der erste Anteil verringert kann der zweite Anteil entsprechend erhöht werden. Dies bietet den Vorteil, dass in einem Betriebszustand, in dem keine Kühlung der Ladeluft erforderlich ist, die Kühlleistung verstärkt bis ausschließlich der Kondensatoreinheit zur Verfügung steht, die in einem derartigen Betriebszustand häufig mehr Kühlleistung als sonst benötigt.

In einem weiteren nicht erfindungsgemäßen Beispiel kann die Durchflussregeleinheit oder eine weitere Durchflussregeleinheit in der Kondensatoreinheit oder in Flussrichtung nach der Kondensatoreinheit angeordnet sein. Die Durchflussregeleinheit oder die weitere Durchflussregeleinheit kann ausgebildet sein, um den zweiten Anteil zu verändern. Bei der weiteren Durchflussregeleinheit kann es sich um die gleiche Art von Vorrichtung wie bei der oben genannten Durchflussregeleinheit handeln. Dies bietet den Vorteil, dass in einem Fall ohne Klimaanlagenbetrieb dem dadurch verringerten Kühlmittelbedarf in der Kondensatoreinheit Rechnung getragen werden kann. Benötigt die Kondensatoreinheit weniger oder keine Kühlleistung, so kann der Kühlmittelstrom durch diese Einheit ebenfalls gedrosselt werden.

Erfindungsgemäß sind die Mittel zum Zuführen des Kühlmittelstroms ausgebildet, um den Kühlmittelstrom in einen ersten Anteil für die Ladeluftkühleinheit und für einen ersten Abschnitt der Kondensatoreinheit sowie in einen zweiten Anteil für einen zweiten Abschnitt der Kondensatoreinheit aufzuteilen. Der erste Anteil und der zweite Anteil des Kühlmittelstroms sind parallele Zweige des Kühlmittelstroms. Der Kühlmittelstrom teilt sich an einer Verzweigungsstelle zwischen den beiden parallelen Zweigen auf. Der erste Zweig mit dem ersten Anteil des Kühlmittelstroms verläuft durch die Ladeluftkühleinheit und den ersten Abschnitt der Kondensatoreinheit. Der zweite Zweig mit dem zweiten Anteil des Kühlmittelstroms verläuft durch den zweiten Abschnitt der Kondensatoreinheit. Der erste und der zweite Abschnitt der Kondensatoreinheit sind bezüglich des Kühlmittels voneinander fluidisch getrennte Abschnitte der Kondensatoreinheit. Dies bietet den Vorteil, dass bei dieser Konfiguration keine Durchflussregeleinheit benötigt wird, um eine bedarfsgerechte Bereitstellung von kaltem Kühlmittel für die Ladeluftkühleinheit und die Kondensatoreinheit zu erreichen. Die Aufteilung des Kühlmittelstroms erfolgt durch Rohr- und/oder Schlauchleitungen, welche die Ladeluftkühleinheit und die Kondensatoreinheit in den Kühlkreislauf einbinden. Die Ladeluftkühleinheit und die Kondensatoreinheit können je nach Bedarf Kühlleistung aus dem Kühlmittelstrom entnehmen. Eine von der Ladeluftkühleinheit entnommene Kühlleistung kann hierbei von einem Betriebszustand des Motors abhängig sein.

Erfindungsgemäß sind die Mittel zum Zuführen des Kühlmittelstroms ausgebildet, um den ersten Anteil des Kühlmittelstroms zuerst der Ladeluftkühleinheit und dann dem ersten Abschnitt der Kondensatoreinheit zuzuführen. Dies bietet den Vorteil, dass die Ladeluftkühleinheit die benötigte Kühlleistung von dem kalten Kühlmittel des ersten Anteils des Kühlmittelstroms beziehen kann. In Fällen, in denen die Ladeluftkühleinheit nicht die maximale Kühlleistung aus dem ersten Anteil des Kühlmittelstroms entnimmt, steht bei dem ersten Abschnitt der Kondensatoreinheit die durch die Ladeluftkühleinheit nicht genutzte Kühlleistung zur Verfügung.

In einem weiteren nicht erfindungsgemäßen Beispiel kann die Kondensatoreinheit einen Unterkühler und einen dem Unterkühler nachgeschalteten Kondensator aufweisen. Die Kondensatoreinheit kann als eine Anordnung einer Kondensationsstrecke und einer Unterkühlstrecke eines kühlmittelgekühlten Kondensatorsystems verstanden werden. Die Kondensationsstrecke kann in Form des als indirekter Kondensator ausgeführten Kondensators realisiert sein. In dem Kondensator kann das einströmende, gasförmige Kältemittel in Kontakt mit Leitungen gebracht werden, die von dem Kühlmittel durchströmt und dadurch gekühlt werden. Auf diese Weise wird eine Kondensation des Kältemittels erreicht, bei der der Phasenwechsel von gasförmig nach flüssig stattfindet. Der Unterkühler kann ausgebildet sein, um das das im Kondensator kondensierte Kältemittel weiter abzukühlen. Der Kondensator und der Unterkühler können als zwei separate und beabstandet zueinander angeordnete Bauteile ausgeführt sein. Anschlüsse des Kondensators und des Unterkühlers können über geeignete Leitungen miteinander verbunden sein.

In einem weiteren nicht erfindungsgemäßen Beispiel kann das Kühlsystem einen dem Unterkühler parallel geschaltetes weiteren Kühler und zusätzlich oder alternativ ein dem Unterkühler parallel geschaltetes Ventil aufweisen. Bei dem Ventil kann es sich um die bereits genannte oder eine weitere Durchflussregeleinheit handeln. Bei dem weiteren Kühler kann es sich beispielsweise um einen Elektronikkühler zum Kühlen einer Elektronik des Fahrzeugs oder um einen Batteriekühler zum Kühlen einer Batterie des Fahrzeugs handeln. Indem der weitere Kühler in einer Umgehungsleitung um den Unterkühler angeordnet ist, wird eine weitere Androsselung des Kühlmittelstroms aufgrund des weiteren Kühlers vermieden. Durch das Ventil kann ein kurzzeitig auftretender Druckabfall reduziert werden.

Ferner kann das Kühlsystem einen der Ladeluftkühleinheit und der Kondensatoreinheit nachgeschalteten Getriebeölkühler aufweisen. Dadurch lässt sich der Getriebekühler in einen durch die Kondensatoreinheit geführten Niedertemperatur-Kreislauf integrieren.

Erfindungsgemäß umfasst das Kühlsystem die Ladeluftkühleinheit und die Kondensatoreinheit. Dies bietet den Vorteil, dass die beiden Einheiten über nur einen Kühlkreislauf mit Kühlmittel versorgt werden können, was effizient, kostengünstig und platzsparend ist.

Ein vorteilhaftes Ausführungsbeispiel der vorliegenden Erfindung sowie unterschiedliche nicht erfindungsgemäße Beispiele werden nachfolgend Bezug nehmend auf die beiliegenden Zeichnungen näher erläutert. Es zeigen:
- Fig. 1: eine Darstellung eines Kühlsystems, gemäß einem nicht erfindungsgemäßen Beispiel, in einer Zusammenschau mit anderen Komponenten und Kreisläufen in einem Fahrzeug;
- Fig. 2: eine schematische Darstellung eines Teils eines Kühlsystems, gemäß einem Ausführungsbeispiel der vorliegenden Erfindung
- Fig. 3: eine schematische Darstellung eines Kühlsystems, gemäß einem nicht erfindungsgemäßen Beispiel;
- Fig. 4: eine schematische Darstellung eines Kühlsystems, gemäß einem nicht erfindungsgemäßen Beispiel;
- Fig. 5: eine schematische Darstellung eines Teils eines Kühlsystems, gemäß einem nicht erfindungsgemäßen Beispiel;
- Fig. 6: eine schematische Darstellung eines Teils eines Kühlsystems, gemäß einem nicht erfindungsgemäßen Beispiel; und
- Fig. 7: eine schematische Darstellung eines Kühlsystems gemäß einem nicht erfindungsgemäßen Beispiel.

In der nachfolgenden Beschreibung werden für die in den verschiedenen Zeichnungen dargestellten und ähnlich wirkenden Elemente gleiche oder ähnliche Bezugszeichen verwendet, wobei eine wiederholte Beschreibung dieser Elemente weggelassen wird.

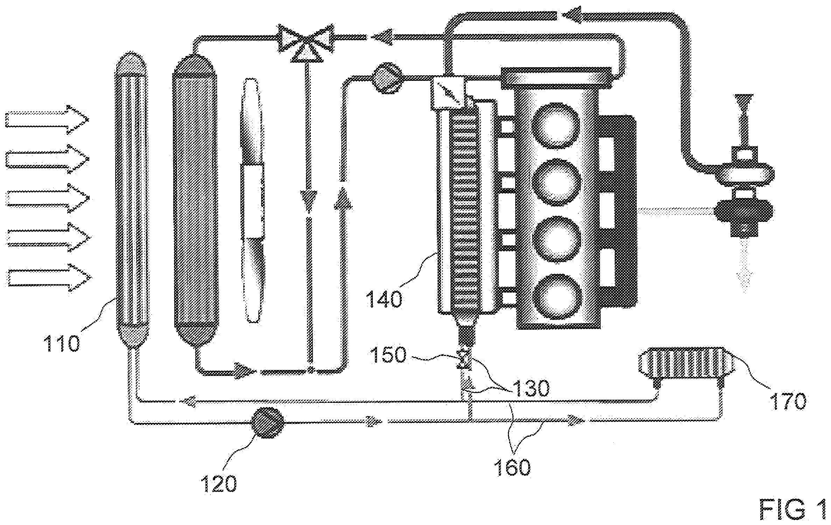

Fig. 1 zeigt eine Darstellung eines Kühlsystems, gemäß einem nicht erfindungsgemäßen Beispiel, in einer Zusammenschau mit anderen Komponenten und Kreisläufen in einem Fahrzeug. Das in Fig. 1 gezeigte Kühlsystem umfasst einen Niedertemperatur-Radiator 110, eine Pumpe 120, einen ersten Zweig 130 eines Kühlmittelstroms, einen Ladeluftkühler 140, ein Thermostat 150, einen zweiten Zweig 160 eines Kühlmittelstroms und einen Kondensator 170. Die genannten Elemente des Kühlsystems sind Teile eines Kühlkreislaufs des Kühlsystems, in dem ein Kühlmittel umgewälzt wird.

Außer dem Kühlsystem gemäß diesem nicht erfindungsgemäßen Beispiel sind in Fig. 1 noch weitere Elemente gezeigt. So ist in Fig. 1 rechts neben dem Niedertemperatur-Radiator 110 ein Hochtemperatur-Radiator für einen Motorkühlkreislauf dargestellt. Der erwähnte Motorkühlkreislauf verläuft von dem Hochtemperatur-Radiator aus durch eine Pumpe, einen Motorblock, der in Fig. 1 rechts neben dem Ladeluftkühler 140 dargestellt ist, und weiter zu einem Dreiwegeventil, bei dem sich der Kühlkreislauf teilt und einerseits zurück zu dem Hochtemperatur-Radiator und andererseits zu der ausgangsseitigen Leitung aus dem Hochtemperatur-Radiator verläuft. Rechts neben dem Hochtemperatur-Radiator befindet sich in Fig. 1 ein Lüfter. An dem oberen Ende des Ladeluftkühlers 140 befindet sich eine Drosselklappe, über die eine Zufuhr von Ladeluft reguliert werden kann. Die Ladeluft, deren Zufuhr durch die in Fig. 1 dick eingezeichnete Pfeillinie dargestellt ist, verlässt den Ladeluftkühler 140 nach rechts zu dem Motorblock. Aus dem Motorblock strömt auf der rechten Seite in Fig. 1 ein Abgasstrom aus. Diese weiteren, in Fig. 1 gezeigten Elemente und Kreisläufe sind beliebig gewählt und sollen lediglich eine mögliche Anordnung des Kühlsystems gemäß diesem nicht erfindungsgemäßen Beispiel zusammen mit anderen Fahrzeugsystemen in einem Fahrzeug veranschaulichen.

Der Niedertemperatur-Radiator 110 wird von Umgebungsluft beströmt, was durch auf den Niedertemperatur-Radiator 110 gerichtete Pfeile angedeutet ist. In dem Niedertemperatur-Radiator 110 wird das Kühlmittel in dem Kühlsystem gemäß diesem Ausführungsbeispiel der vorliegenden Erfindung gekühlt, während das Kühlmittel den Niedertemperatur-Radiator 110 durchströmt. Der Niedertemperatur-Radiator 110 weist einen Eingang und einen Ausgang für das Kühlmittel auf. Durch den Niedertemperatur-Radiator 110 gekühltes Kühlmittel tritt durch den Ausgang in ein Rohrleitungssystem des Kühlsystems gemäß diesem Ausführungsbeispiel der Erfindung aus.

Die Pumpe 120 befindet sich in Flussrichtung des Kühlmittels stromabwärts von dem Niedertemperatur-Radiator 110. Das Kühlmittel tritt in die Pumpe 120 ein, wird durch die Pumpe 120 angetrieben und tritt aus der Pumpe 120 aus.

Austrittsseitig nach der Pumpe 120 befindet sich im Rohrleitungssystem des Kühlsystems gemäß diesem Ausführungsbeispiel der vorliegenden Erfindung eine Verzweigungsstelle. An dieser Verzweigungsstelle teilt sich der Kühlmittelstrom in den ersten Zweig 130 und den zweiten Zweig 160 des Kühlmittelstroms auf.

Der erste Zweig 130 des Kühlmittelstroms führt von der Verzweigungsstelle zudem Ladeluftkühler 140 und von diesem aus zu einer stromabwärts von dem Ladeluftkühler 140 gelegenen Vereinigungsstelle im Rohrleitungssystem. Somit kann ein erster Anteil des Kühlmittelstroms durch den Ladeluftkühler 140 strömen.

Der Ladeluftkühler 140 weist einen Eingang und einen Ausgang für das Kühlmittel auf. Das Kühlmittel dient in dem Ladeluftkühler 140 dazu, Ladeluft für einen Verbrennungsmotor zu kühlen. Dazu wird der Ladeluftkühler 140 auch von der Ladeluft durchströmt, wobei es zu einer Wärmeübertragung von der Ladeluft auf das Kühlmittel kommt. Der Ladeluftkühler 140 wirkt also als ein Wärmeübertrager. Bei dem Ladeluftkühler 140 handelt es sich um einen indirekten Ladeluftkühler, bei dem die Ladeluft nicht direkt über die Umgebungsluft, sondern indirekt über das Kühlmittel gekühlt wird.

Das Thermostat 150 ist in Flussrichtung des Kühlmittels dem Ladeluftkühler 140 nachgeordnet. Das Thermostat 150 ist in einer Ausgangsleitung des Ladeluftkühlers 140 in dem ersten Zweig 130 des Rohrleitungssystems des Kühlsystems angeordnet. Das Thermostat 150 regelt einen Kühlmitteldurchsatz in dem ersten Zweig 130 abhängig von einer Temperatur des Kühlmittels.

Der zweite Zweig 160 des Kühlmittelstroms, der sich an der oben erwähnten Verzweigungsstelle von dem ersten Zweig 130 trennt, führt von der Verzweigungsstelle zu dem Kondensator 170 und von diesem aus zu der oben erwähnten Vereinigungsstelle, die sich in Flussrichtung des Kühlmittels stromabwärts von dem Kondensator 170 befindet. Somit kann ein zweiter Anteil des Kühlmittelstroms durch den Kondensator 170 strömen.

Der Kondensator 170 weist einen Eingang und einen Ausgang für das Kühlmittel auf. Das Kühlmittel dient in dem Kondensator 170 dazu, ein Kältemittel für eine Klimaanlage des Fahrzeugs zu kühlen. Dazu wird der Kondensator 170 auch von dem Kältemittel durchströmt, wobei es zu einer Wärmeübertragung von dem Kältemittel auf das Kühlmittel kommt. Hierbei findet eine Kondensationskühlung des Kältemittels statt. Der Kondensator 170 wirkt somit als ein Wärmeübertrager. Bei dem Kondensator 170 handelt es sich um einen indirekten Kondensator, bei dem das Kältemittel über das Kühlmittel indirekt gekühlt wird.

An der Vereinigungsstelle treffen die beiden Zweige 130 und 160, die sich an der Verzweigungsstelle verzweigen, wieder aufeinander. Von der Vereinigungsstelle aus verläuft der Kühlmittelstrom schließlich zurück zu dem Niedertemperatur-Radiator 110.

Gemäß dem in Fig. 1 gezeigten Beispiel stellt das austrittseitige Thermostat 150 am indirekten oder indirekten und integrierten Ladeluftkühler 140 eine einfache und effiziente Lösung zur Aufteilung des kalten Kühlmittels zwischen dem Ladeluftkühler 140 und dem Kondensator 170 dar. Das Thermostat 150 ist ausgebildet, um zu schließen, wenn keine Ladeluftkühlung erforderlich ist, wie z. B. im Teillast- oder Leerlaufbetrieb des Motors. Andererseits ist das Thermostat 150 ausgebildet, um zu öffnen, wenn die Ladeluft gekühlt werden muss. Das Thermostat 150, im Ladeluftkühler 140 integriert oder direkt anschließend in der Kühlmittelleitung 130 angebracht, reagiert dabei in Abhängigkeit von der Kühlmitteltemperatur, wobei Regeltemperaturen zwischen 50 und 80°C liegen.

Für den indirekten Kondensator (iCond) 170 bedeutet dies vollen Kühlmittelmassenstrom im Teillast- und Leerlaufbetrieb, also in den Betriebsbedingungen, in denen meist die maximale Kondensatorleistung anfällt, was ideal für die Kabinenabkühlung, engl. "cool down", ist.

Das Thermostat 150 am indirekten Ladeluftkühler (iCAC) 140 soll dem indirekten Kondensator 170 die maximale Kühlmittelmenge auf möglichst niedrigem Temperaturniveau zur Verfügung stellen - hierfür ist auch die kaskadierte Ladeluftkühlung eine Option. In diesem Fall wird der Niedertemperatur-Kühlkreislauf grundsätzlich durch die Hochtemperatur-Ladeluftkühlung thermisch entlastet, was das Temperaturniveau absenkt.

Ein Thermostat (nicht gezeigt in Fig. 1) am Austritt des indirekten Kondensators 170 ist für Betriebsbedingungen ohne Klimaanlagenbetrieb sinnvoll.

Vorteil der Erfindung mit austrittsseitigem Thermostat am indirekten Ladeluftkühler 140ist, dass in den Betriebsfällen Leerlauf und Teillast der Niedertemperaturkühler ausschließlich für den indirekten Kondensator 170 zur Verfügung steht und sich damit ein Verbrauchsvorteil für das Fahrzeug ergibt, wobei Realbetrieb gemäß dem Neuen Europäischen Fahrzyklus (NEFZ) mit Klimatisierung vorausgesetzt wird. Im Volllastbetrieb steht dennoch eine ausreichende Kühlung der Ladeluft zur Verfügung.

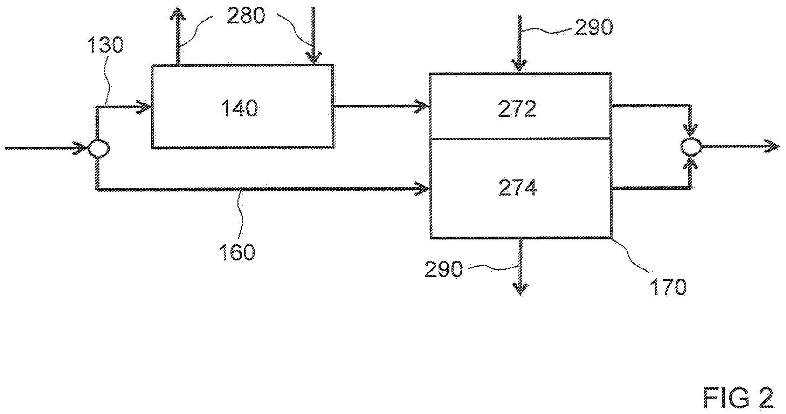

Fig. 2 zeigt eine Darstellung eines Teils eines Kühlsystems, gemäß einem Ausführungsbeispiel der vorliegenden Erfindung. Der in Fig. 2 gezeigte Teil des Kühlsystems umfasst einen ersten Zweig 130 eines Kühlmittelstroms, einen Ladeluftkühler 140, einen zweiten Zweig 160 eines Kühlmittelstroms und einen Kondensator 170 mit einem ersten Kondensatorabschnitt 272 und einem zweiten Kondensatorabschnitt 274. Die genannten Elemente des Kühlsystems sind Teile eines Kühlkreislaufs des Kühlsystems, in dem ein Kühlmittel umgewälzt wird. In der Darstellung von Fig. 2 verläuft der Kühlmittelstrom insgesamt von links nach rechts.

Ferner sind in Fig. 2 zu Veranschaulichungszwecken sowie der Vollständigkeit halber auch ein Ladeluftstrom 280 in den Ladeluftkühler 140 und aus dem Ladeluftkühler 140 und ein Kältemittelstrom 290 durch den Kondensator 170 dargestellt.

In Fig. 2 gelangt der Kühlmittelstrom, beispielsweise von einem Niedertemperatur-Radiator kommend, zunächst an eine Verzweigungsstelle, an der er sich in einen ersten Zweig 130 und einen zweiten Zweig 160 aufteilt. In dem ersten Zweig 130 strömt das Kühlmittel zunächst durch den Ladeluftkühler 140 und danach durch den ersten Kondensatorabschnitt 272 des Kondensators 170, bevor es an einen Vereinigungspunkt stromabwärts von dem Kondensator 170 gelangt. In dem zweiten Zweig 160 strömt das Kühlmittel durch den zweiten Kondensatorabschnitt 274 des Kondensators 170 und gelangt dann an den Vereinigungspunkt mit dem ersten Zweig 130.

Der Kondensator 170 ist in den ersten Kondensatorabschnitt 272 und in den zweiten Kondensatorabschnitt 274 geteilt. Die beiden Abschnitte 272 und 274 sind hinsichtlich des Kühlmittels voneinander fluidisch getrennt. So strömt durch den ersten Kondensatorabschnitt 272 lediglich das Kühlmittel in dem ersten Zweig 130 des Kühlmittelstroms. Durch den zweiten Kondensatorabschnitt 274 strömten lediglich das Kühlmittel in dem zweiten Zweig 160 des Kühlmittelstroms. Somit wird der Kondensator 170 sowohl von dem durch den ersten Zweig 130 als auch durch den zweiten Zweig 160 fließenden Kühlmittel durchflossen.

Das in Fig. 2 gezeigte Ausführungsbeispiel zeigt eine erfindungsgemäße Möglichkeit zur Aufteilung des kalten Kühlmittels zwischen dem Ladeluftkühler 140 und dem Kondensator 170, indem eine Aufteilung des Kondensators 170 in zwei Abschnitte bzw. Einheiten 272, 274, welche wie in Fig. 2 gezeigt miteinander verschaltet sind. In dem einen Kühlmittelpfad 130 sind der Ladeluftkühler 140 und der erste Abschnitt 272 des Kondensators 170 in Serie geschaltet und in dem anderen parallelen Kühlmittelpfad 160 befindet sich der zweite Abschnitt 274 des Kondensators 170. Im Kondensator 170, hier für den Fall eines Stapelscheibenkondensators, kann eine vorhandene kältemittelseitige Umlenkung als Trennung der Kühlmittelversorgung verwendet werden.

Diese Verschaltung ist dann sinnvoll, wenn der Ladeluftkühler 140 einen geringen Druckverlust im Verhältnis zum Kondensator 170 hat, minimal 1:3, und es ansonsten erforderlich wäre, den Kühlmittelpfad durch den Ladeluftkühler 140 inkl. Thermostat, wie in Fig. 1 beschrieben, zusätzlich abzudrosseln. Ein Thermostat ist in diesem Falle nicht erforderlich. Das Kühlmittel kühlt entweder nur den ersten und den zweiten Abschnitt 272, 274 des Kondensators 170 oder zusätzlich mit der Vorlast des Ladeluftkühlers 140 den Kondensator 170.

Im Falle der Aufteilung des Kondensators 170 wird die Verschlauchung des Kondensators 170 zwar etwas aufwendiger, jedoch muss vorteilhafterweise keine Androsselung bzw. Veränderung der Pumpenleistung des Niedertemperatur-Kreislaufes vorgenommen werden.

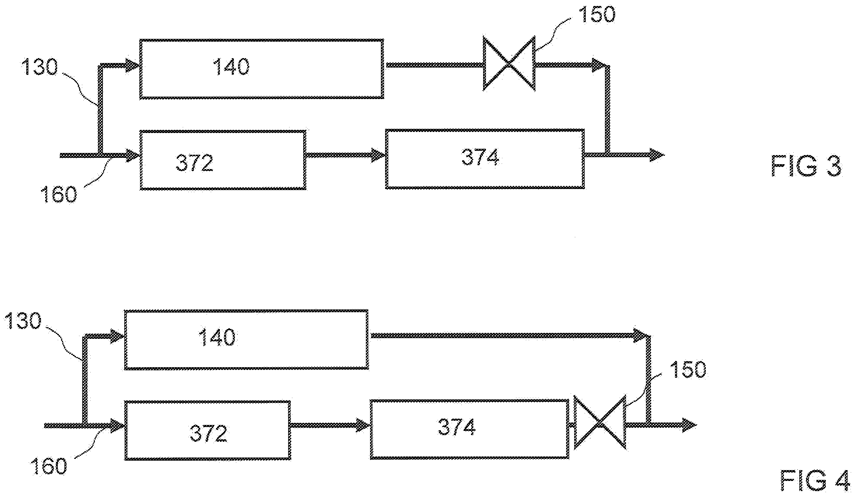

Fig. 3 zeigt eine schematische Darstellung eines Kühlsystems gemäß einem nicht erfindungsgemäßen Beispiel. Das Kühlsystem umfasst einen ersten Zweig 130 eines Kühlmittelstroms mit einem Ladeluftkühler 140 und einem dem Ladeluftkühler 140 nachgeschalteten Ventil 150 sowie einen zweiten Zweig 160 eines Kühlmittelstroms mit einem Unterkühler 372 und einem den Unterkühler 372 in Bezug auf eine Richtung des Kühlmittelstroms durch den Zweig 160 nachgeschalteten Kondensator 374. Der Unterkühler 372 und der Kondensator 374 bilden eine Kondensatoreinheit, die beispielsweise bei dem in Fig. 1 gezeigten System als die Kondensatoreinheit 170 eingesetzt werden kann. In dem Unterkühler 372 kann ein in dem Kondensator 374 kondensiertes Kältemittel eines Kältemittelkreislaufs weiter abgekühlt werden. Dazu sind der Unterkühler 372 und der Kondensator 374 über eine in Fig. 3 nicht gezeigte Leitung zur Führung eines Kältemittels verbunden.

Vor dem Ladeluftkühler 140 und dem Unterkühler 372 verzweigt sich ein gemeinsamer Kühlmittelstrom in den ersten Zweig 130 und den zweiten Zweig 160. Nach dem Ventil 150 und dem Kondensator 374 werden der erste Zweig 130 und der zweite Zweig 160 wieder zusammengeführt. Das Kühlsystem umfasst somit einen kühlmittelgekühlten Kondensator 374 mit einem parallel geschalteten Ladeluftkühler 140 und einem Ventil 150 im Kühlmittelpfad 130 des Ladeluftkühlers 140.

Fig. 4 zeigt eine schematische Darstellung eines Kühlsystems gemäß einem weiteren nicht erfindungsgemäßen Beispiel. Das in Fig. 4 gezeigte Kühlsystem entspricht dem in Fig. 3 gezeigten Kühlsystem mit dem Unterschied, dass das Ventil 150 dem Kondensator 374 nachgeschaltet ist. Nach dem Ladeluftkühler 140 und dem Ventil 150 werden der erste Zweig 130 und der zweite Zweig 160 wieder zusammengeführt. Das Kühlsystem umfasst somit einen kühlmittelgekühlten Kondensator 374 mit einem parallel geschalteten Ladeluftkühler 140 und einem Ventil 150 im Kühlmittelpfad 160 des Kondensators 374.

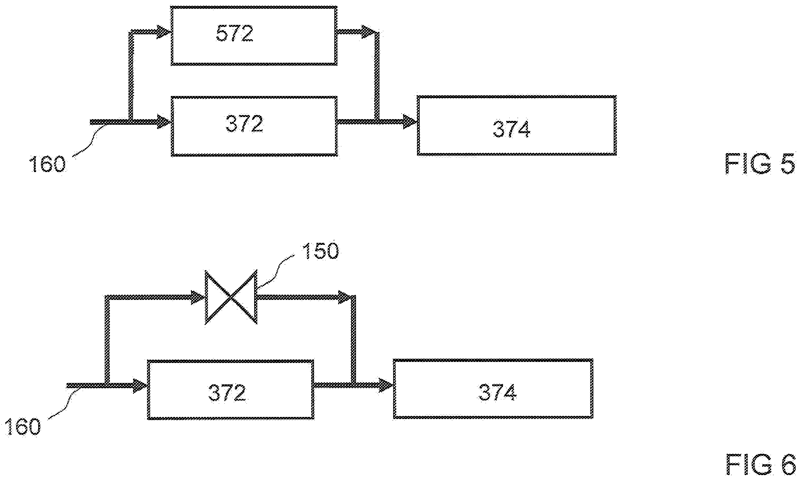

Fig. 5 zeigt eine schematische Darstellung eines Teils eines Kühlsystems gemäß einem nicht erfindungsgemäßen Beispiel. Gezeigt ist ein Zweig 160 eines Kühlmittelstroms durch eine Parallelschaltung aus einem Unterkühler 372 und einem Zusatzkühler 572 und einem der Parallelschaltung aus dem Unterkühler 372 und dem Zusatzkühler 572 nachgeschalteten Kondensator 374. Somit zeigt Fig. 5 einen kühlmittelgekühlten Kondensator 374 mit einem Zusatzkühler 572 parallel zum Unterkühler 372.

Fig. 6 zeigt eine schematische Darstellung eines Teils eines Kühlsystems gemäß einem nicht erfindungsgemäßen Beispiel. Gezeigt ist ein Zweig 160 eines Kühlmittelstroms durch eine Parallelschaltung aus einem Unterkühler 372 und einem Ventil 150 und einem der Parallelschaltung aus dem Unterkühler 372 und dem Ventil 150 nachgeschalteten Kondensator 374. Somit zeigt Fig. 6 einen kühlmittelgekühlten Kondensator 374 mit einer durch das Ventil 150 verschließbaren Bypassleitung um den Unterkühler 372.

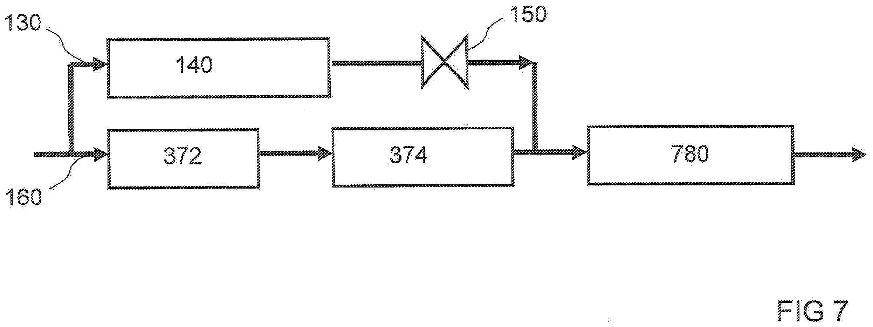

Fig. 7 zeigt eine schematische Darstellung eines Kühlsystems gemäß einem nicht erfindungsgemäßen Beispiel. Das Kühlsystem umfasst einen ersten Zweig 130 eines Kühlmittelstroms mit einem Ladeluftkühler 140 und einem dem Ladeluftkühler 140 nachgeschalteten Ventil 150 sowie einen zweiten Zweig 160 eines Kühlmittelstroms mit einem Unterkühler 372 und einem dem Unterkühler 372 nachgeschalteten Kondensator 374. Vor dem Ladeluftkühler 140 und dem Unterkühler 372 verzweigt sich ein gemeinsamer Kühlmittelstrom in den ersten Zweig 130 und den zweiten Zweig 160. Nach dem Ventil 150 und dem Kondensator 374 werden der erste Zweig 130 und der zweite Zweig 160 wieder zusammengeführt. Nach der Zusammenführung des ersten Zweigs 130 und des zweiten Zweigs 160 wird der gemeinsame Kühlmittelstrom durch einen Getriebeölkühler 780 geführt. Das Kühlsystem umfasst somit einen kühlmittelgekühlten Kondensator 374 mit einem parallel geschalteten Ladeluftkühler 140 vor einem Getriebeölkühler 780.

Anhand der Figuren 3 bis 7 werden im Folgenden nicht erfindungsgemäße Beispiele der vorliegenden Erfindung beschrieben, bei denen ein Kältemittel vom Kondensator 374 in den Unterkühler 372 strömt. In der Strömung zwischen dem Kondensator 374 und dem Unterkühler 372 kann sich ein Sammler befinden. Der Unterkühler 372 wird kühlmittelseitig in der Strömung vor dem Kondensator 374 angeordnet.

Gemäß einem Beispiel strömt das gesamte Kühlmittel des Zweigs 160 durch den Unterkühler 372 und anschließend durch den Kondensator 374.

Zur Vermeidung eines zu hohen kühlmittelseitigen Druckabfalles ist der Unterkühler 374 mit nur einem kühlmittelseitigen Strömungspfad ausgeführt. Zur Verringerung des kühlmittelseitigen Druckabfalles wird der Unterkühler 372 mit einem größeren hydraulischen Durchmesser als der Kondensator 374 ausgeführt.

Alternativ dazu ist es möglich, für den Unterkühler 372 Scheiben einzusetzen, die in Strömungsrichtung eine geringere Länge als der Kondensator 374 aufweisen, um so die Lauflänge der kühlmittelseitigen Durchströmung zu verringern. Ebenso sind Kombinationen beider Maßnahmen, z. B kürzere Lauflänge in Kombination mit größerem hydraulischer Durchmesser, denkbar und vorteilhaft.

Die Kältemittelgeschwindigkeit im Unterkühler 372 ist in der Regel relativ gering im Vergleich zur Kühlmittelgeschwindigkeit, was zu geringen Wärmeübergangskoeffizienten auf der Kältemittelseite führt. Zur Erhöhung des Wärmeüberganges ist es daher empfehlenswert, durch eine oder mehrere Umlenkungen die Kältemittelgeschwindigkeit zu erhöhen. Dadurch weist der Unterkühler zwei, drei oder mehr Strömungswege auf. Diese Maßnahme ist bei allen vorherigen Kombinationen umsetzbar und ist unabhängig von der Anzahl der kältemittelseitigen Strömungswege im Kondensator.

Ein Bauteil 372, 374 in der oben genannten Konfiguration wird in der Regel parallel zu einem weiteren Wärmeübertrager, bevorzugt einem Ladeluftkühler 140, eingesetzt. Zur Steuerung der Kühlungsleistung weist mindestens einer der beiden Pfade 130, 160 ein Absperr- oder Regelventil 150 auf, wie es in den Figuren 3 und 4 gezeigt ist. Durch das Ventil 150 kann der Volumenstrom gelenkt oder aufgeteilt werden.

Neben den genannten Beispielen, bei denen der Unterkühler 372 mit der vollen Kühlmittelmenge beaufschlagt wird, kann auch ein Bypass um den Unterkühler 372 vorgesehen werden, um den Gesamtvolumenstrom im Niedertemperatur-Kreislauf nicht zu stark anzudrosseln. In diesen Bypass um den Unterkühler 372 können weitere Wärmeübertrager, bevorzugt einen Elektronikkühler oder einen Batteriekühler für Hybridfahrzeuge integriert werden. Ein entsprechender Bypass mit einem Zusatzkühler 572 ist in Fig. 5 gezeigt.

Alternativ dazu ist es denkbar, den Bypass um den Unterkühler 372 mit einem Ventil 150 zu versehen, um so kurzzeitig den Druckabfall weiter zu reduzieren. Eine solche Anordnung ist in Fig. 6 gezeigt.

Im Falle einer zusätzlichen Getriebeölkühlung im Niedertemperatur-Kühlkreislauf ist eine Anordnung von parallelverschaltetem iCond, mit oder ohne Unterkühler 372 und Kondensator 374, und parallelem Ladeluftkühler 140 mit einem hierzu seriell verschaltetem Getriebeölkühler 780 realisierbar.

Der Unterkühler 372 und der Kondensator 374 können als integriertes Bauteil ausgeführt werden. Genauso sind jedoch getrennte Bauteile denkbar. Der gesamte Kühlmittelstrom des zweiten Zweigs 160 kann erst durch den Unterkühler 372 und dann durch den Kondensator 374 geführt werden. Allerdings sind, je nach Konfiguration, auch Ausführungsbeispiele möglich, bei denen ein Teilstrom am Unterkühler 372 vorbeigeführt wird. Dieser Bypass des Unterkühlers 374 ist in das Bauteil des Unterkühlers 372 integrierbar. Bei mehreren Strömungswegen im Kondensator 374 ist es zudem denkbar, über den Bypass einen Pfad des Kondensators 374 mitzuversorgen und die Strömung im weiteren Pfad des Kondensators 374 zu sammeln.

## Patentansprüche

1. Kühlsystem für ein Fahrzeug, wobei das Kühlsystem eine Ladeluftkühleinheit (140) für eine Motoranordnung und eine Kondensatoreinheit (170) für eine Klimaanlage aufweist, wobei das Kühlsystem weiterhin folgende Merkmale aufweist:
Mittel (130, 150, 160) zum Zuführen eines Kühlmittelstroms an die Ladeluftkühleinheit (140) und an die Kondensatoreinheit (170), die an einen gemeinsamen Kühlmittelkreislauf angeschlossen sind,
bei dem die Mittel (130, 160) zum Zuführen des Kühlmittelstroms ausgebildet sind, um den Kühlmittelstrom in einen ersten Anteil für die Ladeluftkühleinheit (140) und für einen ersten Abschnitt (272) der Kondensatoreinheit (170) sowie in einen zweiten Anteil für einen zweiten Abschnitt (274) der Kondensatoreinheit (170) aufzuteilen,
bei dem die Mittel (130, 160) zum Zuführen des Kühlmittelstroms ausgebildet sind, um den ersten Anteil des Kühlmittelstroms zuerst der Ladeluftkühleinheit (140) und dann dem ersten Abschnitt (272) der Kondensatoreinheit (170) zuzuführen.

2. Kühlsystem gemäß Anspruch 1, mit einem der Ladeluftkühleinheit (140) und der Kondensatoreinheit (170) nachgeschalteten Getriebeölkühler (780).

## Claims

1. A cooling system for a vehicle, wherein the cooling system has a charge air cooling unit (140) for a motor arrangement and a condenser unit (170) for an air-conditioning system, wherein the cooling system further has the following features:
means (130, 150, 160) for delivering a coolant flow to the charge air cooling unit (140) and to the condenser unit (170), which are connected to a common coolant circuit,
wherein the means (130, 160) for delivering the coolant flow are designed in order to separate the coolant flow into a first part for the charge air cooling unit (140) and for a first section (272) of the condenser unit (170) and into a second part for a second section (274) of the condenser unit (170),
wherein the means (130, 160) for delivering the coolant flow are designed in order to deliver the first part of the coolant flow to the charge air cooling unit (140) first and then to the first section (272) of the condenser unit (170).

2. The cooling system according to claim 1, with a transmission oil cooler (780) downstream of the charge air cooling unit (140) and the condenser unit (170) .

## Revendications

1. Système de refroidissement pour un véhicule, où le système de refroidissement présente un ensemble de refroidissement d'air de suralimentation (140) pour un agencement de moteur, et un ensemble formant condenseur (170) pour un système de climatisation, où le système de refroidissement présente en outre les caractéristiques suivantes :
des moyens (130, 150, 160) servant à fournir un flux de liquide de refroidissement, à l'ensemble de refroidissement d'air de suralimentation (140) et à l'ensemble formant condenseur (170) qui sont raccordés à un circuit de liquide de refroidissement commun,
système de refroidissement dans lequel les moyens (130, 160) servant à fournir le flux de liquide de refroidissement sont conçus pour répartir le flux de liquide de refroidissement suivant une première proportion prévue pour l'ensemble de refroidissement d'air de suralimentation (140) et pour une première partie (272) de l'ensemble formant condenseur (170), ainsi que suivant une seconde proportion prévue pour une seconde partie (274) de l'ensemble formant condenseur (170),
système de refroidissement dans lequel les moyens (130, 160) servant à fournir le flux de liquide de refroidissement sont conçus pour fournir la première proportion du flux de liquide de refroidissement, d'abord à l'ensemble de refroidissement d'air de suralimentation (140), puis à la première partie (272) de l'ensemble formant condenseur (170).

2. Système de refroidissement selon la revendication 1, comprenant un refroidisseur d'huile de transmission (780) monté en aval de l'ensemble de refroidissement d'air de suralimentation (140) et en aval de l'ensemble formant condenseur (170).
